# EUROPÄISCHE PATENTSCHRIFT

(11) **EP 1 382 501 B1**
(45) Veröffentlichungstag und Bekanntmachung des Hinweises auf die Patenterteilung: **06.06.2007**
(21) Anmeldenummer: 03016114.5
(22) Anmeldetag: 16.07.2003
(51) Int. Cl.: B60T 1/087

(54) **Strömungsbremse**
Hydrodynamic retarder
Frein hydro-dynamique

(30) Priorität: 18.07.2002 DE 10232404
(43) Veröffentlichungstag der Anmeldung: 21.01.2004
(73) Patentinhaber: ADAM OPEL AG, 65423 Rüsselsheim (DE)
(72) Erfinder: Schieck, Rudi, 55232 Alzey (DE)

(56) Entgegenhaltungen:
- EP-A- 0 251 073
- EP-A- 0 428 311
- EP-A- 0 719 683
- DE-A- 3 440 081
- DE-A- 4 408 349
- DE-C- 3 713 580
- US-A- 2 691 489

## Beschreibung

Die Erfindung bezieht sich auf eine Strömungsbremse, insbesondere für ein Kraftfahrzeug, mit einer über eine Welle angetriebenen Umlaufverdrängerpumpe zum Fördern eines hydraulischen Fluids in einem Kreislauf, in dem ein Steuerventil und ein Drosselventil parallel zu der Umlaufverdrängerpumpe geschaltet sind, wobei das Steuerventil zum Bremsen der Welle das Fluid durch das Drosselventil leitet.

Die DE-AS 2 106 931 offenbart eine Bremsanlage für ein Kraftfahrzeug mit einer Strömungsbremse und einer durch ein Druckmittel, insbesondere ein hydraulisches Druckmittel, betätigbaren Reibungsbremse, deren Bremsmomente an einem beiden Bremsen gemeinsamen Bremshebel einstellbar sind. Im Weiteren sind jeweils eine mittels des Bremshebels beaufschlagte Druckmittelzuleitung zur Strömungsbremse und zur Reibungsbremse und ein Regelventil zum Einstellen des Bremsmitteldruckes in der Zuleitung zur Reibungsbremse in Abhängigkeit vom Bremsmoment der Strömungsbremse und von dem vom Bremshebel freigegebenen bzw. erzeugten Bremsmitteldruck vorhanden.

Eine Strömungsbremse, ein so genannter Retarder, wird bei schweren Fahrzeugen vor allem eingesetzt, um die insbesondere bei Bremsung aus hoher Fahrgeschwindigkeit anfallende kinetische Bremsenergie aufzunehmen und in Wärme umzusetzen, aber auch für geforderte Dauerbremsleistungen sind Retarder geeignet. Als Betriebsfluid dient in der Regel Öl. Die im Retarder an das Betriebsfluid abgegebene Wärme wird mittele eines speziellen Wärmetauschers einem Kühlmittel oder der Umgebungsluft zugeführt. Ein bekannter hydrodynamischer Retarder umfasst eine Rotoreinheit und eine dazu beabstandete Statoreinheit. Die Rotoreinheit ist mit einer abzubremsenden Welle verbunden, während die Statoreinheit gehäusefest angeordnet ist. Das zwischen der Rotoreinheit und der Statoreinheit vorhandene Betriebsfluid wird infolge der Beaufschlagung von einem Drehmoment seitens der Rotoreinheit angetrieben und zirkuliert in dem Arbeitskreislauf des Retarders. Das dabei dem Betriebsfluid abverlangte Moment dient dazu, die Welle abzubremsen, wobei stets eine gewisse Differentdrehzahl aufrechterhalten werden muss.

Im Weiteren offenbart die EP 0 719 683, die den Oberbegriff des Anspruchs 1 bildet, eine Strömungsbremse, insbesondere für ein Kraftfahrzeug, mit einer über eine Welle angetriebenen Umlaufverdrängerpumpe zum Fördern eines hydraulischen Fluids in einem Kreislauf, in dem ein Steuerventil und ein Drosselventil parallel zu der Umlaufverdrängerpumpe geschaltet sind, wobei das Steuerventil zum Bremsen der Welle das Fluid durch das Drosselventil leitet.

Aus der US-A-2 691 489 ist eine Strömungsbremse, insbesondere für ein Kraftfahrzeug, mit einer über eine Welle angetriebenen Umlaufverdrängerpumpe zum Fördern eines hydraulischen Fluids in einem Kreislauf bekannt, in den ein Drossel- oder Abschaltventil eingesetzt ist. Zwischen der Pumpe und dem Drossel- oder Abschaltventil befindet sich ein Überdruckventil.

Ferner zeigt die DE 34 40 081 A1 eine Strömungsbremse für ein Kraftfahrzeug, bei der ein Ventil vorgesehen ist, um bei einem Druckanstieg eines Fluids eine mechanische Bremse zum Bremsen einer Welle anzusteuern.

Schließlich offenbart die EP 0 251 073 A2 eine Strömungsbremse für ein Kraftfahrzeug mit einem über eine elektronische Anti-Blockiereinrichtung ansteuerbaren Drosselventil.

Darüber hinaus ist aus der EP 0 428 311 A2 eine Strömmungsbremse bekannt, in der ein Impulsventil benutzt wird.

Es ist Aufgabe der Erfindung, eine Strömungsbremse der eingangs genannten Art zu schaffen, die auch bei einer Störung in ihrer Ansteuerung gefahrlos sowie zuverlässig arbeitet, wobei zur Strömungsbremse eine zusätzliche Bremswirkung erzeugt wird.

Erfindungsgemäß wird die Aufgabe dadurch gelöst, dass das Steuerventil als Impulsventil ausgebildet ist und in dem Kreislauf ein Ventil vorhanden ist, das bei einem durch das Drosselventil verursachten Druckanstieg des Fluids eine mechanische Bremse zum Bremsen der Welle ansteuert.

Die Welle treibt die Umlaufverdrängerpumpe an und das Fluid, beispielsweise Öl oder Bremsflüssigkeit, wird nahezu drucklos durch den Kreislauf gefördert. Zum Bremsen oder Stillsetzen der Welle und somit auch eines damit verbundenen Bauteils wird das Fluid durch das Drosselventil geleitet. Durch die Verengung des Querschnittes im Kreislauf wird ein Druck aufgebaut, gegen den das Drehmoment der Welle wirkt und der somit zum Bremsen der Welle führt. Selbstverständlich kann das Drosselventil derart ausgebildet sein, dass es einen veränderbaren Durchflussquerschnitt zur Erzeugung variabler Bremsmomente aufweist. Falls der Durchflussquerschnitt des Drosselventils komplett geschlossen ist, ist eine Drehbewegung der Welle verhindert. Aufgrund der Ausgestaltung des Steuerventils als Impulsventil bleibt das Steuerventil bei einer Störung in seiner Beaufschlagung in der zuletzt eingenommenen Stellung. Um eine zur Strömungsbremse zusätzliche Bremswirkung zu erzeugen, ist das Ventil vorhanden, das die mechanische Bremse zum Bremsen der Welle ansteuert. Die mechanische Bremse ist beispielsweise als Reibungsbremse ausgeführt. Die Regelung der Durchflussrichtungen des Fluids wird mittels in den Kreislauf eingesetzter Rückschlagventile bewerkstelligt.

Zur Verhinderung einer Beschädigung der Strömungsbremse aufgrund eines unzulässigen Druckes im Kreislauf ist zweckmäßigerweise in dem Kreislauf ein Überdruckventil parallel zu dem Drosselventil geschaltet.

Zweckmäßigerweise erfolgt eine Ansteuerung des Steuerventils, des Drosselventils und/oder des Ventils elektrisch. Vorteilhafterweise erfolgt die Ansteuerung mittels eines Steuergerätes, das mit einem Bremspedalschalter und/oder einem Radsensor gekoppelt ist. Im Weiteren steht das Steuergerät mit einem Gierratensensor in Verbindung.

Vorzugsweise ist die Welle eine Achswelle eines Kraftfahrzeugrades oder eine Lenkwelle einer Servolenkung eines Kraftfahrzeuges. Insbesondere ist die Verwendung der Strömungsbremse zum Abbremsen oder Stillsetzen der Lenkwelle vorteilhaft, da aufgrund der relativ niedrigen Drehzahl der Lenkwelle lediglich geringe Verluste beim Antrieb der Umlaufverdrängerpumpe auftreten.

Zur Abkühlung bzw. zum Ausgleich von Verlusten bzw. Druckverlusten des Fluids ist in den Kreislauf ein Wärmetauscher, ein Vorratsbehälter und/oder ein Druckspeicher für das Fluid eingesetzt.

Zweckmäßigerweise ist die Umlaufverdrängerpumpe als Zahnradpumpe ausgebildet. Diese Bauart der Umlauf verdrängerpumpe hält dem relativ hohen Druck im Kreislauf stand und wirkt sich insbesondere bei einer niedrigen Drehzahl nicht negativ auf das Strömungsverhalten des Fluids aus.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand mehrerer Ausführungsbeispiele unter Bezugnahme auf die zugehörigen Zeichnungen näher erläutert. Es zeigen:
- Fig. 1: eine schematische Darstellung einer erfindungsgemäßen Strömungsbremse,
- Fig. 2: eine schematische Darstellung der Strömungsbremse in einer alternativen Ausgestaltung,
- Fig. 3: ein Blockschaltbild der Strömungsbremse nach Fig. 2 und
- Fig. 4: eine schematische Darstellung einer Verwendung der Strömungsbremse nach Fig. 2 in einem Bremssystem eines Kraftfahrzeuges.

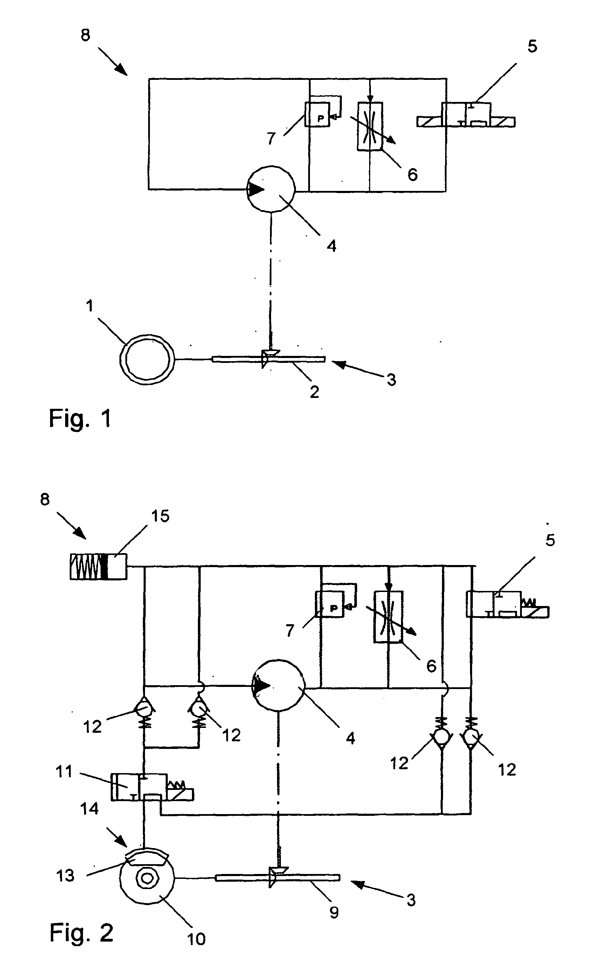

Gemäß Fig. 1 ist ein Lenkrad 1 einer hydraulischen Servolenkung über die ihm zugeordnete, als Lenkwelle 2 ausgebildete Welle 3 mit einer Umlaufverdrängerpumpe 4 der Strömungsbremse 8 gekoppelt. Durch die Drehung des Lenkrades 1 wird die Umlaufverdrängerpumpe 4 angetrieben und fördert ein hydraulisches Fluids im Kreislauf durch ein Steuerventil 5. Zum Abbremsen der Drehbewegung des Lenkrades 1 wird das Steuerventil 5 beaufschlagt, das daraufhin das Fluid durch ein parallel zum Steuerventil 5 geschaltetes Drosselventil 6 leitet. Das Drosselventil 6 bewirkt eine Reduzierung des Durchflussquerschnittes im Kreislauf, womit ein Druckanstieg des Fluids und damit ein Abbremsen der Lenkwelle 2 einhergeht. Der Durchflussquerschnitt im Drosselventil 6 kann zum Stillsetzen der Lenkwelle 2 komplett geschlossen werden. Um eine Beschädigung der Strömungsbremse aufgrund eines zu hohen Druckes des Fluids im Kreislauf zu verhindern, ist ein zum Drosselventil 6 und zum Steuerventil 5 parallel geschaltetes Überdruckventil 7 vorgesehen.

Nach Fig. 2 steht die Umlaufverdrängerpumpe 4 der Strömungsbremse 8 über die als Achswelle 9 ausgeführte Welle 3 mit einem Kraftfahrzeugrad 10 in Verbindung. Der Kreislauf des Fluids ist dahingehend erweitert, dass ein Ventil 11 unter Zwischenschaltung von die Strömungsrichtung regelnden Rückschlagventilen 12 vorgesehen ist, wobei das Ventil 11 mit einem Bremssattel 13 einer mechanischen Bremse 14 für das Kraftfahrzeugrad 10 gekoppelt ist. Im Weiteren ist ein Druckspeicher 15 vorgesehen. Zum Bremsen des Kraftfahrzeugrades 10 wird das Steuerventil 5 strombeaufschlagt, woraufhin das Fluid zum Druckaufbau durch das Drosselventil 6 geleitet wird. Der erhöhte Druck des Fluids führt zum Abbremsen der Drehgeschwindigkeit des Kraftfahrzeugrades 10. Gleichzeitig beaufschlagt das Fluid über das entsprechend geschaltete Ventil 11 den Bremssattel 13. Der Druckspeicher 15 stellt die Wirkung der mechanischen Bremse 14 bei einem Stillstand des Kraftfahrzeugrades 10 sicher.

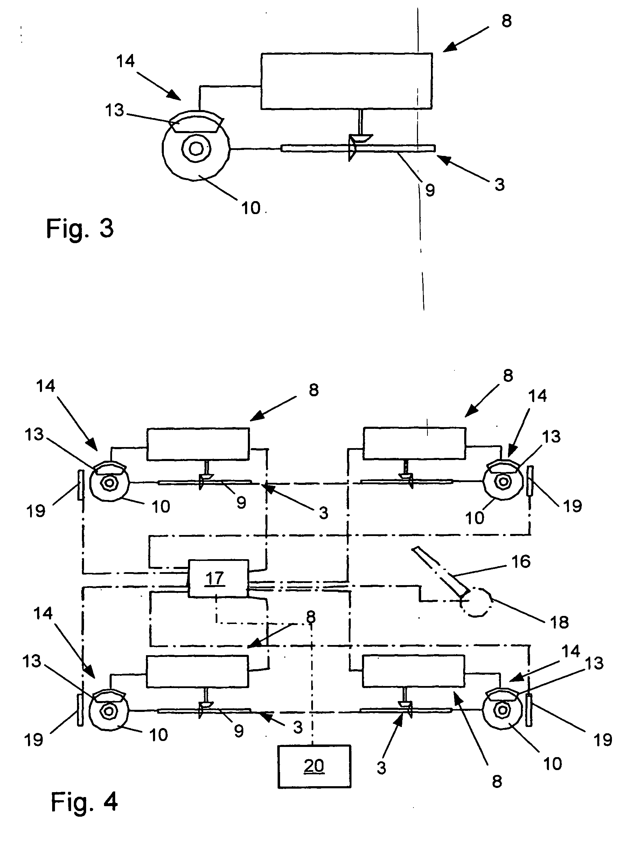

Gemäß Fig. 4 sind mehrere Strömungsbremsen 8 zu einem Bremssystem eines Kraftfahrzeuges zusammengefasst, wobei zu ihrer Veranschaulichung die Darstellung nach Fig. 3, die der zu Fig. 2 erläuterten Ausführung entspricht, gewählt wurde. Zum Bremsen der Kraftfahrzeugräder 10 wird mit einem Bremspedal 16 ein mit einem Steuergerät 17 verbundener Bremspedalschalter 18 betätigt. Das Steuergerät 17 beaufschlagt die Steuerventile 5, die Drosselventile 6 sowie die Ventile 11 jeder Strömungsbremse 8 separat, so dass eine gezielte, individuelle Bremsung jedes Kraftfahrzeugrades 10 erfolgt. Um die momentane Geschwindigkeit des einzelnen Kraftfahrzeugrades 10 zu erfassen, ist jedem Kraftfahrzeugrad 10 ein mit dem Steuergerät 17 gekoppelter Radsensor 19 zugeordnet. Im Weiteren zieht das Steuergerät 17 Rückschlüsse bezüglich der Lage des Kraftfahrzeuges aus der Signalgebung eines mit dem Steuergerät 17 verbundenen Gierratensensors 20.

### Bezugszeichenliste

- 1.: Lenkrad
- 2.: Lenkwelle
- 3.: Welle
- 4.: Umlaufverdrängerpumpe
- 5.: Steuerventil
- 6.: Drosselventil
- 7.: Überdruckventil
- 8.: Strömungsbremse
- 9.: Achswelle
- 10.: Kraftfahrzeugrad
- 11.: Ventil
- 12.: Rückschlagventil
- 13.: Bremssattel
- 14.: Bremse
- 15.: Druckspeicher
- 16.: Bremspedal
- 17.: Steuergerät
- 18.: Bremspedalschalter
- 19.: Radsensor
- 20.: Gierratensensor

## Patentansprüche

1. Strömungsbremse, insbesondere für ein Kraftfahrzeug, mit einer über eine Welle (3) angetriebenen Umlaufverdrängerpumpe (4) zum Fördern eines hydraulischen Fluids in einem Kreislauf, in dem ein Steuerventil (5) und ein Drosselventil (6) parallel zu der Umlaufverdrängerpumpe (4) geschaltet sind, wobei das Steuerventil (5) zum Bremsen der Welle (3) das Fluid durch das Drosselventil (6) leitet, **dadurch gekennzeichnet, dass** das Steuerventil (5) als Impulsventil ausgebildet ist und in dem Kreislauf ein Ventil (11) vorhanden ist, das bei einem durch das Drosselventil (6) verursachten Druckanstieg des Fluids eine mechanische Bremse (14) zum Bremsen der Welle (3) ansteuert.

2. Strömungsbremse nach Anspruch 1, **dadurch gekennzeichnet, dass** in dem Kreislauf ein Überdruckventil (7) parallel zu dem Drosselventil (6) geschaltet ist.

3. Strömungsbremse nach Anspruch 1 oder 2, **dadurch gekennzeichnet, dass** eine Ansteuerung des Steuerventils (5), des Drosselventils (6) und/oder des Ventils (11) elektrisch erfolgt.

4. Strömungsbremse nach Anspruch 3, **dadurch gekennzeichnet, dass** die Ansteuerung mittels eines Steuergerätes (17) erfolgt, das mit einem Bremspedalschalter (18) und/oder einem Radsensor (19) gekoppelt ist.

5. Strömungsbremse nach Anspruch 4, **dadurch gekennzeichnet, dass** das Steuergerät (17) mit einem Gierratensensor (20) in Verbindung steht.

6. Strömungsbremse nach einem der Ansprüche 1 bis 5, **dadurch gekennzeichnet, dass** die Welle (3) eine Achswelle (9) eines Kraftfahrzeugrades (10) oder eine Lenkwelle (2) einer Servolenkung eines Kraftfahrzeuges ist.

7. Strömungsbremse nach einem der Ansprüche 1 bis 6, **dadurch gekennzeichnet, dass** in den Kreislauf ein Wärmetauscher, ein Vorratsbehälter und/oder ein Druckspeicher (15) für das Fluid eingesetzt ist.

8. Strömungsbremse nach Anspruch 1, **dadurch gekennzeichnet, dass** die Umlaufverdrängerpumpe (4) als Zahnradpumpe ausgebildet ist.

## Claims

1. Hydrodynamic brake especially for a motor vehicle, comprising a re-circulating positive-displacement pump (4) driven by a shaft (3) for pumping a hydraulic fluid through a closed loop in which a control valve (5) and a throttle valve (6) are connected in parallel with the re-circulating positive-displacement pump (4), wherein the control valve (5) directs the fluid through the throttle valve (6) for the purposes of braking the shaft (3), **characterized in that** the control valve (5) is in the form of a pulse valve and **in that** a valve (11) is located in the closed loop and controls a mechanical brake (14) for the purposes of braking the shaft (3) when there is an increase of pressure in the fluid caused by the throttle valve (6).

2. Hydrodynamic brake in accordance with Claim 1, **characterized in that** a relief valve (7) is connected in parallel with the throttle valve (6) in the closed loop.

3. Hydrodynamic brake in accordance with Claim 1 or 2, **characterized in that** control of the control valve (5), the throttle valve (6) and/or the valve (11) is effected electrically.

4. Hydrodynamic brake in accordance with Claim 3, **characterized in that** control is effected by means of a control device (17) which is coupled to a brake pedal switch (18) and/or a wheel sensor (19).

5. Hydrodynamic brake in accordance with Claim 4, **characterized in that** the control device (17) is connected to a yaw rate sensor (20).

6. Hydrodynamic brake in accordance with any of the Claims 1 to 5, **characterized in that** the shaft (3) is a axle shaft (9) of a motor vehicle wheel (10) or a steering shaft (2) in a power steering system of a motor vehicle.

7. Hydrodynamic brake in accordance with any of the Claims 1 to 6, **characterized in that** a heat exchanger, a storage vessel and/or an accumulator (15) for the fluid are included in the closed loop.

8. Hydrodynamic brake in accordance with Claim 1, **characterized in that** the re-circulating positive-displacement pump (4) is in the form of a gear pump.

## Revendications

1. Frein hydrodynamique, en particulier pour un véhicule à moteur, comportant une pompe volumétrique rotative (4) entraînée par un arbre (3) et destinée à refouler un fluide hydraulique dans un circuit, dans lequel une valve de régulation (5) et une valve d'étranglement (6) sont montées en parallèle avec la pompe volumétrique rotative (4), la valve de régulation (5) pilotant le passage du fluide à travers la valve d'étranglement (6) en vue du freinage de l'arbre (3), **caractérisé en ce que** la valve de régulation (5) est réalisée sous forme de valves à impulsions et dans le circuit est montée une valve (11) qui active un frein (14) mécanique destiné au freinage de l'arbre (3) lorsque se produit une augmentation de la pression du fluide générée par la valve d'étranglement (6).

2. Frein hydrodynamique selon la revendication 1, **caractérisé en ce qu'**une soupape de surpression (7) est montée dans le circuit en parallèle avec la valve d'étranglement (6).

3. Frein hydrodynamique selon la revendication 1 ou 2, **caractérisé en ce que** la valve de régulation (5), la valve d'étranglement (6) et/ou la valve (11) sont activées électriquement.

4. Frein hydrodynamique selon la revendication 3, **caractérisé en ce que** l'activation est effectuée au moyen d'un dispositif de commande (17) qui est couplé à un commutateur de pédale de frein (18) et/ou à un capteur de roue (19).

5. Frein hydrodynamique selon la revendication 4, **caractérisé en ce que** le dispositif de commande (17) est relié à un capteur de la vitesse de lacet (20).

6. Frein hydrodynamique selon l'une quelconque des revendications 1 à 5, **caractérisé en ce que** l'arbre (3) est un essieu (9) d'une roue (10) de véhicule à moteur ou un arbre de direction (2) d'une direction assistée d'un véhicule à moteur.

7. Frein hydrodynamique selon l'une quelconque des revendications 1 à 6, **caractérisé en ce que** dans le circuit sont mis en place un échangeur thermique, un réservoir de stockage et/ou un accumulateur de pression (15) pour le fluide.

8. Frein hydrodynamique selon la revendication 1, **caractérisé en ce que** la pompe volumétrique rotative (4) est réalisée sous forme de pompe à engrenage.
